# EUROPEAN PATENT APPLICATION

(11) **EP 3 975 301 A1**
(43) Date of publication of application: **30.03.2022**
(21) Application number: 21165031.2
(22) Date of filing: 25.03.2021
(51) Int. Cl.: H01M 10/04, H01M 50/528, H01M 50/531, H01M 50/536

(54) **ELECTROCHEMICAL APPARATUS AND ELECTRONIC APPARATUS**

(30) Priority: 25.09.2020 CN 202011029073
(71) Applicant: Ningde Amperex Technology Limited, Ningde City, Fujian Province 352100 (CN)
(72) Inventor: LI, Yong, Ningde City, Fujian 352100 (CN); ZENG, Qiao, Ningde City, Fujian 352100 (CN)
(74) Representative: Icosa

(57) **Abstract**

Disclosed is an electrochemical apparatus and an electronic apparatus for mitigating the difficulty of infiltration in an electrolyte solution and improving the electrochemical performance. The electrochemical apparatus includes an electrode assembly, a first current collecting member including a first current collecting plate and a first conductive portion, and a second current collecting member including a second current collecting plate and a second conductive portion. The first conductive portion is located between the first current collecting plate and the electrode assembly, and the second conductive portion is located between the second current collecting plate and the electrode assembly. The first current collecting plate includes a first portion, the second current collecting plate includes a second portion, and the electrode assembly satisfies at least one of the following conditions: no first conductive portion is provided on the first portion, and no second conductive portion is provided on the second portion.

## Description

### TECHNICAL FIELD

This application relates to the field of electrochemical technologies, and specifically, to an electrochemical apparatus and an electronic apparatus.

### BACKGROUND

A lithium-ion battery includes a positive electrode, a negative electrode, a separator, and an electrolyte solution. The positive electrode and the negative electrode are infiltrated in the electrolyte solution. Lithium ions move between the positive electrode and the negative electrode by using the electrolyte solution as a medium to charge and discharge the lithium-ion battery. An existing lithium-ion battery usually uses a cylindrical full-tab structure to lead out tabs through welding. To be specific, blank foils are left at outer ends of a positive electrode and a negative electrode, winding is performed to form an electrode assembly, then the blank foils at both ends of the electrode assembly is flattened, and current collecting plates are welded on flattened planes of the blank foils respectively.

### SUMMARY

This application provides an electrochemical apparatus and an electronic apparatus, to mitigate the difficulty of infiltration in an electrolyte solution caused by connection of electrode plates and a current collecting plate of the electrochemical apparatus, and improve electrochemical performance of the electrochemical apparatus.

An embodiment of this application provides an electrochemical apparatus, including an electrode assembly, where the electrode assembly includes a first electrode plate, a second electrode plate, and a separator, and the separator is arranged between the first electrode plate and the second electrode plate. The electrochemical apparatus further includes a first current collecting member and a second current collecting member, and along an axial direction of the electrode assembly, the first current collecting member and the second current collecting member are located at two opposite ends of the electrode assembly. The first current collecting member includes a first current collecting plate and a first conductive portion arranged on the first current collecting plate, the first conductive portion is located between the first current collecting plate and the electrode assembly, and the first conductive portion is connected to the first electrode plate. The second current collecting member includes a second current collecting plate and a second conductive portion arranged on the second current collecting plate, the second conductive portion is located between the second current collecting plate and the electrode assembly, and the second conductive portion is connected to the second electrode plate. The first current collecting plate includes a first portion, the second current collecting plate includes a second portion, and the electrode assembly satisfies at least one of the following conditions: no first conductive portion is provided on the first portion, and no second conductive portion is provided on the second portion.

In the electrochemical apparatus provided in this application, the conductive portions are arranged between the electrode plates of the electrode assembly and the current collecting plates, and the conductive portion corresponding to one of the electrode plates is only arranged in a partial region of the current collecting plate. In this way, through regions in which the conductive portions are not arranged, fluid conductive space is formed between the region in which the electrode plates of the electrode assembly are located and the current collecting plate, to mitigate the difficulty of infiltration in an electrolyte solution caused by connection of electrode plates and current collecting plates of the existing electrochemical apparatus, and improve electrochemical performance of the electrochemical apparatus.

In some embodiments, in the axial direction of the electrode assembly, orthographic projections of the first conductive portion and the second conductive portion do not completely overlap. On a cross section perpendicular to the axial direction of the electrode assembly, the electrolyte solution of the electrochemical apparatus can infiltrate the electrode assembly from at least one of the positive electrode and the negative electrode of the electrode assembly.

Further, in some embodiments, in the axial direction of the electrode assembly, the orthographic projections of the first conductive portion and the second conductive portion have no overlapping portion. This can further improve that the electrolyte solution of the electrochemical apparatus can infiltrate the electrode assembly from at least one of the positive electrode and the negative electrode of the electrode assembly.

In some embodiments, the first conductive portion is solder or conductive glue, and the second conductive portion is solder or conductive glue.

In some embodiments, the conductive glue has a first through-hole. In this way, the conductive glue forms a structure with a through-hole. In a region in which the conductive glue is provided as the first conductive portion or the second conductive portion, the conductive glue does not completely isolate fluid conduction, that is, the electrolyte solution can still be conducted through the first through-hole, and then infiltrate the electrode assembly.

In some embodiments, at least one of the first portion or the second portion is provided with a second through-hole, and the electrolyte solution can enter the electrode assembly from the second through-hole. This can prevent the current collecting plate from blocking infiltration of the electrolyte solution.

In some embodiments, a projection of a straight line from a center to an edge of the electrode assembly on the first current collecting plate is located in the first portion. In this way, an orthographic projection of the first portion of the first current collecting plate on a cross section perpendicular to a central axis of the winding electrode assembly is distributed from the center to the edge. This can improve an infiltration effect of the electrolyte solution on the winding electrode assembly from the center to the edge.

The first electrode plate includes a first current collector and a first active material layer arranged on the first current collector. The second electrode plate includes a second current collector and a second active material layer provided on the second current collector. Along the axial direction of the electrode assembly, the first current collector includes a first tab, and the second current collector includes a second tab. The first tab is connected to the first conductive portion, and the second tab is connected to the second conductive portion.

In some embodiments, at least one of the first tab or the second tab includes a third through-hole. In this way, the electrolyte solution can infiltrate the electrode assembly through the third through-hole, to improve the infiltration effect of the electrolyte solution on the electrode assembly with the existence of the first tab or the second tab.

In some embodiments, the electrode assembly is a winding structure. Along a winding direction of the winding structure, a length of the first tab is the same as a length of the first current collector. Alternatively, the electrode assembly is a laminated structure, and along a direction perpendicular to the axial direction of the electrode assembly, a length of the first tab is the same as a length of the first current collector.

In some embodiments, at least one of the first tab or the second tab is provided with a groove. The groove may communicate with inner space and outer space of the electrode assembly together with the first portion or the second portion to improve the infiltration effect of the electrode assembly.

In some embodiments, the first tab is provided with a plurality of grooves. Along a direction perpendicular to the axial direction of the electrode assembly, orthographic projections of the plurality of grooves have an overlapping portion. The design of the plurality of grooves can further improve the infiltration effect of the electrode assembly.

In some embodiments, the first current collecting plate includes a first insulation member, and the first insulation member is arranged on an edge of the first current collecting plate. In this way, the design of the current collecting plate including the insulation member can reduce the short circuit risk of the conductive glue overflowing and contacting a housing, and reduce the short circuit risk caused by the current collecting plate contacting the housing.

Some embodiments of this application further provide an electronic apparatus, including the electrochemical apparatus according to any one of the foregoing embodiments.

### BRIEF DESCRIPTION OF DRAWINGS

To describe technical solutions in embodiments of this application more clearly, the following briefly describes the accompanying drawings required for describing the embodiments. Apparently, the accompanying drawings in the following description merely show some embodiments of this application, and a person skilled in the art can derive other accompanying drawings from these accompanying drawings.
FIG. 1 is a schematic diagram of a connection between a current collecting plate and an electrode assembly of an electrochemical apparatus according to an embodiment of this application.
FIG. 2 is a schematic diagram of a cross-sectional structure of a first current collecting member according to an embodiment of this application.
FIG. 3 is a schematic diagram of a first portion of a first current collecting plate according to Embodiment 1 of this application.
FIG. 4 is a schematic structural diagram of a second portion of a second current collecting plate according to Embodiment 1 of this application.
FIG. 5 is a schematic structural plan view of a first current collecting member according to Embodiment 1 of this application.
FIG. 6 is a schematic structural plan view of a second current collecting member according to Embodiment 1 of this application.
FIG. 7 is a schematic diagram of orthographic projections of a first conductive portion and a second conductive portion on a cross section perpendicular to an electrode assembly according to Embodiment 1 of this application.
FIG. 8 is a schematic structural plan view of a first current collecting member according to Embodiment 2 of this application.
FIG. 9 is a schematic structural plan view of a second current collecting member according to Embodiment 2 of this application.
FIG. 10 is a schematic structural plan view of a first current collecting member according to Embodiment 3 of this application.
FIG. 11 is a schematic structural plan view of a second current collecting member according to Embodiment 3 of this application.
FIG. 12 is a schematic structural plan view of a first current collecting member according to Embodiment 4 of this application.
FIG. 13 is a schematic structural plan view of a second current collecting member according to Embodiment 4 of this application.
FIG. 14 is a schematic structural diagram of a battery according to Embodiment 5 of this application.
FIG. 15 is a schematic structural diagram of a flattened plane of a conductive tab according to an embodiment of this application.
FIG. 16 is a schematic structural diagram of a conductive tab according to an embodiment of this application.
FIG. 17 is a schematic diagram of an end face of a winding electrode assembly according to an embodiment of this application.

### DESCRIPTION OF EMBODIMENTS

Embodiments of this application provide an electrochemical apparatus and an electronic apparatus, to mitigate the difficulty of infiltration in an electrolyte solution caused by connection of electrode plates and a current collecting plate of the electrochemical apparatus, and improve electrochemical performance of the electrochemical apparatus.

A positive electrode, a negative electrode, and a separator are winded into an electrode assembly, then blank foils at both ends of the electrode assembly are flattened, and current collecting plates are welded on flattened planes of the blank foils respectively. However, the flattened foils are not in close contact, and surfaces of the flattened planes are uneven, and the current collecting plates are easy to fall off the flattened planes. The conductive glue is applied on the current collecting plates to attach the current collecting plates to the flattened planes, so that the current collecting plates can be in close contact with the flattened planes. This can reduce internal resistance and improve consistency, but limits infiltration of the electrolyte solution on the electrode plates of the electrochemical apparatus and affects electrochemical performance of the electrochemical apparatus. The following clearly describes the technical solutions in the embodiments of this application with reference to the accompanying drawings. Apparently, the described embodiments are some but not all of the embodiments of this application. In absence of conflicts, the following embodiments and technical features in the embodiments may be combined.

The electrochemical apparatus in this application includes all apparatuses in which electrochemical reactions occur. For example, the electrochemical apparatus includes, but is not limited to, all kinds of electrochemical apparatuses such as primary batteries, secondary batteries, fuel cells, solar cells, and capacitors (for example, supercapacitors). The electrochemical apparatus is particularly preferably a lithium secondary battery, including but not limited to a lithium metal secondary battery, a lithium-ion secondary battery, a lithium polymer secondary battery, and a lithium-ion polymer secondary battery.

The first current collecting plate and the second current collecting plate in this specification only refer to current collecting parts, and are not intended to limit a shape or structure of the current collecting plate to a disc shape. Actually, the first current collecting plate and the second current collecting plate may have a non-disc shape such as a square.

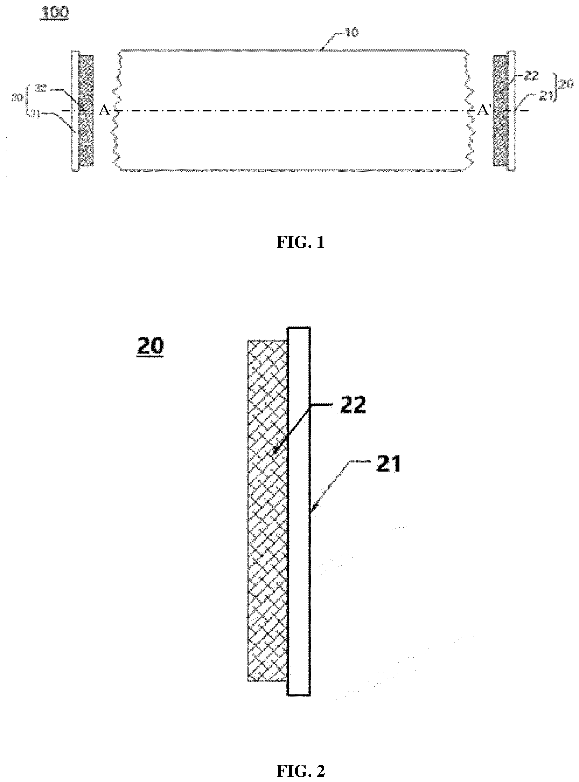

The following describes an electrochemical apparatus 100 according to some embodiments of this application with reference to FIG. 1 to FIG. 8 by using a lithium-ion battery as an example.

An embodiment of this application provides an electrochemical apparatus 100. Referring to FIG. 1, the electrochemical apparatus 100 includes an electrode assembly 10. The electrode assembly 10 includes a first electrode plate, a second electrode plate, and a separator (not shown in FIG. 1). The separator is arranged between the first electrode plate and the second electrode plate. The electrochemical apparatus 100 further includes a first current collecting member 20 and a second current collecting member 30. Along an axial direction of the electrode assembly 10, the first current collecting member 20 and the second current collecting member 30 are located at two opposite ends of the electrode assembly 10. For example, the electrochemical apparatus 100 may be a lithium-ion battery, the first current collecting member 20 is located at a current leading-out terminal of a positive electrode plate of the lithium-ion battery, and the second current collecting member 30 is located at a current leading-out terminal of a negative electrode plate of the lithium-ion battery.

When electrode assembly 10 is a winding electrode assembly, the axial direction of electrode assembly 10 is a direction from a collecting end of one electrode plate (one of the positive electrode plate and the negative electrode plate) to a current collecting end of the other electrode plate of the winding electrode assembly on the winding electrode assembly. In some more specific embodiments, the axial direction of the electrode assembly 10 is a direction from one tab (one of a positive tab and a negative tab) to the other tab of the electrode assembly 10 on the electrode assembly 10. For the cylindrical winding electrode assembly shown in FIG. 1, the axial direction of the electrode assembly 10 is an axial direction AA' of the cylindrical electrode assembly, that is, a direction of a rotation center axis of a cylinder. The first current collecting member 20 and the second current collecting member 30 are located outside two end faces of the cylindrical electrode assembly.

The first current collecting member 20 includes a first current collecting plate 21 and a first conductive portion 22 arranged on the first current collecting plate 21. The first conductive portion 22 is located between the first current collecting plate 21 and the electrode assembly 10, the first conductive portion 22 is connected to the first electrode plate, and the first conductive portion 22 is configured to electrically connect the first electrode plate and the first current collecting plate 21 of the electrode assembly 10. The second current collecting member 30 includes a second current collecting plate 31 and a second conductive portion 32 arranged on the second current collecting plate 31. The second conductive portion 32 is located between the second current collecting plate 31 and the electrode assembly 10, the second conductive portion 32 is connected to the second electrode plate, and the second conductive portion 32 is configured to electrically connect the second electrode plate and the second current collecting plate 31 of the electrode assembly 10.

The first current collecting plate 21 includes a first portion 210, the second current collecting plate 31 includes a second portion 310, and the electrochemical apparatus 100 satisfies at least one of the following conditions: no first conductive portion 22 is provided on the first portion 210, and no second conductive portion 32 is provided on the second portion 310. When no first conductive portion 22 is provided on the first portion 210 of the first current collecting plate 21, outer space of the electrode assembly 10 and inner space of the electrode assembly 10 can be better connected, reducing influence of presence of the first conductive portion 22 on infiltration of the electrolyte solution, as well as the further influence on electrochemical reaction in the electrochemical apparatus 100. When no second conductive portion 32 is provided on the second portion 310 of the second current collecting plate 31, the outer space of the electrode assembly 10 and the inner space of the electrode assembly 10 can be better connected, reducing influence of presence of the second conductive portion 32 on infiltration of the electrolyte solution, as well as the further influence on electrochemical reaction in the electrochemical apparatus 100.

In some embodiments of this application, no first conductive portion 22 is provided on the first portion 210 of the first current collecting plate 21, the first current collecting plate 21 is connected to the first electrode plate of the electrode assembly 10 through the first conductive portion 22, the first portion 210 of the first current collecting plate 21 is opposite to the electrode assembly 10, and a first gap exists between the first portion 210 of the first current collecting plate 21 and the electrode assembly 10. In this way, the electrolyte solution can enter the electrode assembly 10 at least from the first gap.

In some embodiments of this application, no second conductive portion 32 is provided on the second portion 310 of the second current collecting plate 31, the second current collecting plate 31 is connected to the second electrode plate of the electrode assembly 10 through the second conductive portion 32, the second portion 310 of the second current collecting plate 31 is opposite to the electrode assembly 10, and a second gap exists between the second portion 310 of the second current collecting plate 31 and the electrode assembly 10. In this way, the electrolyte solution can enter the electrode assembly 10 at least from the second gap.

In some embodiments of this application, no first conductive portion 22 is provided on the first portion 210 of the first current collecting plate 21, and no second conductive portion 32 is provided on the second portion 310 of the second current collecting plate 31. The first gap exists between the first current collecting plate 21 and the electrode assembly 10, and the second gap exists between the second current collecting plate 31 and the electrode assembly 10. In this way, the electrolyte solution can enter the electrode assembly 10 at least from the first gap and the second gap.

In some embodiments, the electrochemical apparatus 100 is a lithium-ion battery, and in this case, the foregoing electrode assembly 10 is an electrode assembly of the lithium-ion battery. Based on the solution of this application, the difficulty of infiltration in an electrolyte solution caused by connection between the electrode plates and the current collecting plates of the existing lithium-ion battery can be at least partially mitigated, and electrochemical performance of the lithium-ion battery can be improved.

In some embodiments, an orthographic projection 22' of the first conductive portion 22 and an orthographic projection 32' of the second conductive portion 32 have non-overlapping portions, that is, the orthographic projection 22' of the first conductive portion 22 and the orthographic projection 32' of the second conductive portion 32 do not completely overlap. In the non-overlapping portion, at least one of the positive electrode and the negative electrode of the electrode assembly 10 does not have a conductive portion, which can achieve that the electrolyte solution of the electrochemical apparatus 100 can infiltrate the electrode assembly 10 from the positive electrode or the negative electrode of the electrode assembly 10 on which no conductive portion is provided.

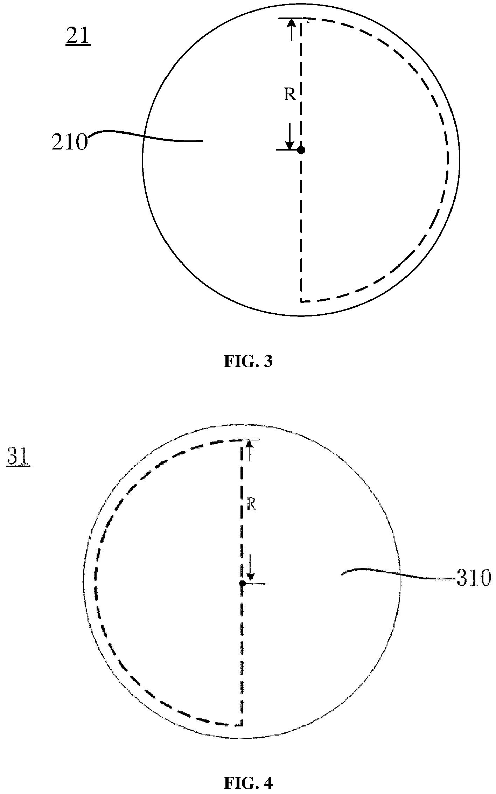

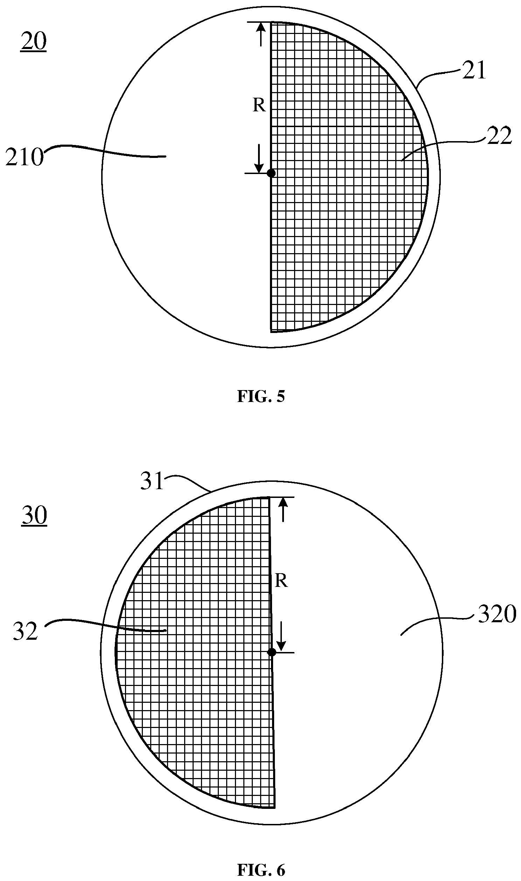

In some embodiments, as shown in FIG. 3, the first current collecting plate 21 has a disc shape. A first conductor 22 is arranged in a semicircular region of the first current collecting plate 21, and no first conductor 22 is arranged in a remaining region (that is, the first portion 210 of the first current collecting plate 21). A center of the semicircle coincides with a center of the first current collecting plate 21, a radius of the semicircle is R, and R is smaller than a radius of the first current collecting plate 21. The semicircle is only distributed on one side of the first current collecting plate 21, for example, the right side in FIG. 3. FIG. 5 is a structural diagram of the first current collecting plate 21 provided with the first conductive portion 22. For example, the first conductive portion 22 is solder or conductive glue. The conductive glue may be conductive silver glue, conductive graphite glue, conductive copper glue, and the like. Certainly, the first conductive portion 22 may alternatively be another conductive adhesive material.

As shown in FIG. 4, the second current collecting plate 31 has a disc shape. A second conductor 32 is arranged in a semicircular region of the second current collecting plate 31, and no second conductor 32 is arranged in a remaining region of the second current collecting plate 31 (that is, the second portion 310). A center of the semicircle coincides with a center of the second current collecting plate 31, and is distributed on one side of the second current collecting plate 31, for example, the left side in the figure. FIG. 6 is a schematic structural diagram of the second current collecting plate 31 provided with no second conductive portion 32 in the second portion 310. For example, the second conductive portion 32 may be solder or conductive glue. Certainly, the second conductive portion 32 may alternatively be another conductive adhesive material.

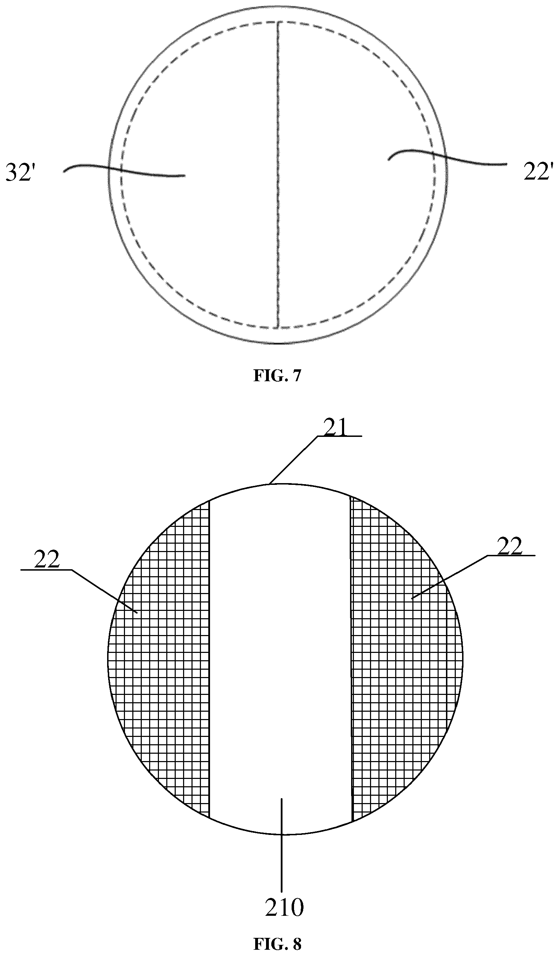

As shown in FIG. 7, on a cross section perpendicular to the central axis of the electrode assembly 10, the orthographic projection 22' of the first conductive portion 22 and the orthographic projection 32' of the second conductive portion 32 have no overlapping portion. This can achieve that the electrolyte solution of the electrochemical apparatus 100 can infiltrate the electrode assembly 10 from at least one of the positive electrode and the negative electrode of the electrode assembly 10.

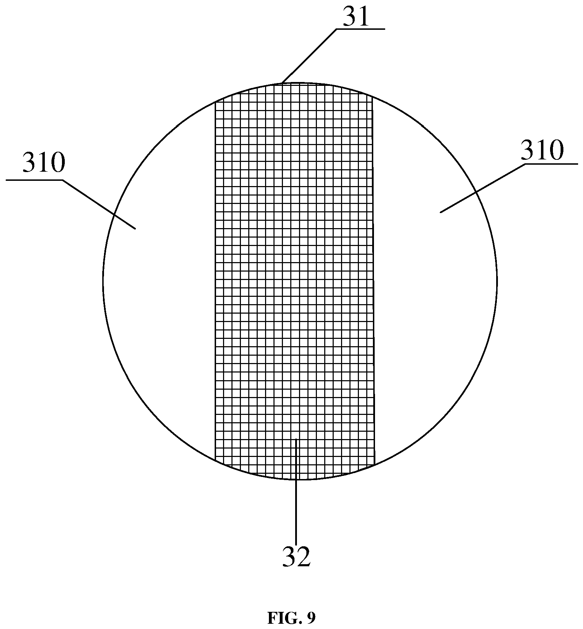

In some embodiments, further, as shown in FIG. 8 and FIG. 9, in the axial direction of the electrode assembly 10, orthographic projections of the first portion 210 and the second portion 310 also have non-overlapping portions. This can achieve that an even infiltration effect of the electrolyte solution on the cross section perpendicular to the central axis.

Referring to the electrochemical apparatus 100 shown in FIG. 1, for the winding electrode assembly, the axial direction is parallel to a direction of the central axis of the winding electrode assembly 10, or may be understood as being parallel to a direction of a winding axis of the winding electrode assembly 10. The orthographic projections of the first portion 210 and the second portion 310 on the cross section perpendicular to the central axis of the winding electrode assembly 10 have non-overlapping portions. This can achieve that an even infiltration effect of the electrolyte solution on the cross section. For a laminated battery, an axial direction may be a direction parallel to electrode plates.

As shown in FIG. 8, the first portion 210 is a strip-shaped region distributed in the middle of the first current collecting plate 21. No first conductive portion 22 is arranged in the strip-shaped region in the middle of the first current collecting plate 21, and the first conductive portion 22 is arranged in a remaining region. As shown in FIG. 9, the second portion 310 of the second current collecting plate 31 includes two cut circles located on both sides of the second current collecting plate 31, on which no second conductive portion 32 is provided, and the second conductive portion 32 is ranged in a middle region corresponding to the first portion 210 of the first current collecting plate 21.

On the cross section perpendicular to the central axis of the winding electrode assembly 10, the orthographic projection of the first portion 210 and the orthographic projection of the second portion 310 have non-overlapping portions. The orthographic projections of the two portions together cover a cross section of the central axis of the winding electrode assembly 10. The orthographic projection of the first portion 210 and the orthographic projection of the second portion 310 exhibit a complementary effect. On the cross section perpendicular to the central axis of the winding electrode assembly 10, there is no region on which internal space of the electrode assembly 10 cannot be fluidly connected to external space, which means that the electrolyte solution can be distributed over the entire area of the cross section.

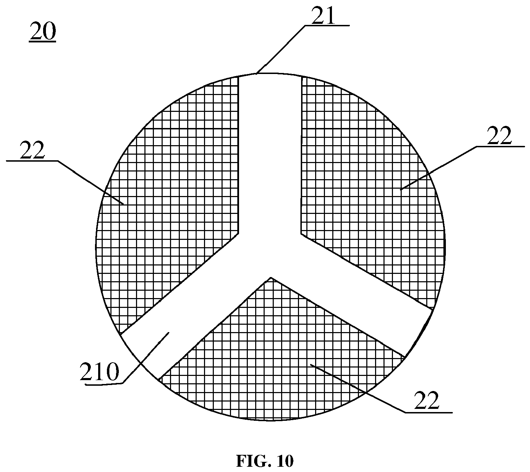

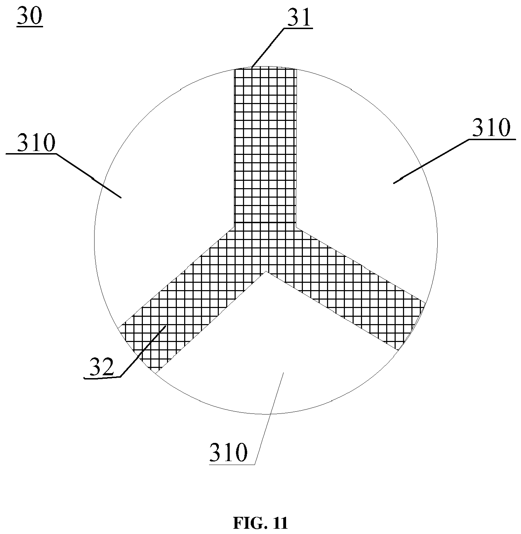

In other embodiments of this application, the first portion 210 and the second portion 310 may have other shapes. For example, preferably, as shown in FIG. 10, the first portion 210 of the first current collecting plate 21 is a "three-pointed star"-like region extending from the same center. The first portion 210 divides the first current collecting plate 21 into three fan-shaped regions, and the first conductive portion 22 is arranged in each of the three fan-shaped regions. The first portion 210 is blank, and no first conductive portion 22 is arranged. As shown in FIG. 11, the second current collecting plate 31 also has a "three-pointed star"-like region corresponding to the first portion 210, and the second conductive portion 32 is arranged therein. A remaining region of the second current collecting plate 31 is the second portion 310 of the second current collecting plate 31, and includes three fan-shaped regions divided by a region covered by the second conductive portion 32. The three fan-shaped regions, that is, the second portion 310 of the second current collecting plate 31, are blank, and no second conductive portion 32 is arranged.

The first portion 210 of the first current collecting plate 21 corresponds to a distribution region of the second conductive portion 32 of the second current collecting plate 31. To be specific, on the cross section perpendicular to the central axis of the winding electrode assembly, the orthographic projections of the first portion 210 and the distribution region of the second conductive portion 32 of the second current collecting plate 31 overlap. The second portion 310 of the second current collecting plate 31 corresponds to a distribution region of the first conductive portion 22 of the first current collecting plate 21. To be specific, on the cross section perpendicular to the central axis of the winding electrode assembly, the orthographic projections of the second portion 310 and the distribution region of the first conductive portion 22 of the first current collecting plate 21 overlap. Based on the conductive connection design shown in FIG. 10 and FIG. 11, the electrolyte solution can be distributed across an entire area of the cross section perpendicular to the axial direction of the electrode assembly. This maximizes a connection area between the electrode plates and the current collecting plates while improving the infiltration effect of the electrolyte solution on the electrode assembly.

In some embodiments of this application, the first conductive portion 22 or the second conductive portion 32 may be provided with a first through-hole. For example, in some embodiments of this application, at least one of the first conductive portion 22 and the second conductive portion 32 is conductive glue, and the conductive glue has the first through-hole. In this way, even though in a region in which the conductive glue is used as the first conductive portion 22 or the second conductive portion 32, the conductive glue does not completely isolate fluid conduction, that is, the electrolyte solution can still be conducted through the first through-hole. In some embodiments, when the first conductive portion 22 is the conductive glue, after the first conductive portion 22 is coated on the first current collecting plate 21, a structure with a through-hole is formed.

In some embodiments, the first portion 210 of the first current collecting plate 21 is provided with a second through-hole, or the second portion 310 of the second current collecting plate 31 is provided with a second through-hole 40, or the first portion 210 of the first current collecting plate 21 and the second portion 310 of the second current collecting plate 31 each are provided with a second through-hole 40, and the electrolyte solution can flow into the electrode assembly 10 through the second through-hole 40. This can prevent the current collecting plate from blocking flow of the electrolyte solution.

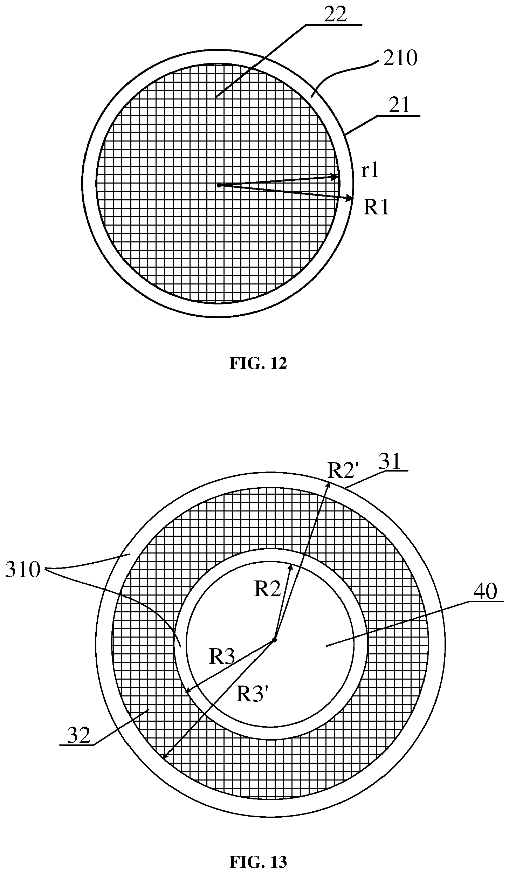

For example, as shown in FIG. 12, a radius of the first current collecting plate 21 is R1, and the first conductive portion 22 is arranged in a central circular region. A radius of the central circular area is rl, and r1<R1. As shown in FIG. 13, the second current collecting plate 31 has a disc shape, an inner diameter is R2, and an outer diameter is R2'. An annular second conductive portion 32 is arranged on the second current collecting plate 31, an inner diameter is R3, and an outer diameter is R3', where R2≤R3<R3'≤R2' and r1≤R3. A circular region with the radius R2 on the second current collecting plate 31 is the second portion 310 of the second current collecting plate 31, and no second conductive portion 32 is arranged. The second portion 310 of the second current collecting plate 31 is provided with a second through-hole 40.

In some embodiments, a projection of a straight line from a center to an edge of the electrode assembly 10 on the first current collecting plate 21 is located in the first portion 210. In this way, an orthographic projection of the first portion 210 of the first current collecting plate 21 on the cross section perpendicular to the central axis of the winding electrode assembly 10 is distributed from the center to the edge. This can improve an infiltration effect of the electrolyte solution on the winding electrode assembly 10 from the center to the edge.

Alternatively, in some embodiments, a projection of a straight line from a center to an edge of the electrode assembly 10 on the second current collecting plate 31 is located in the second portion 310.

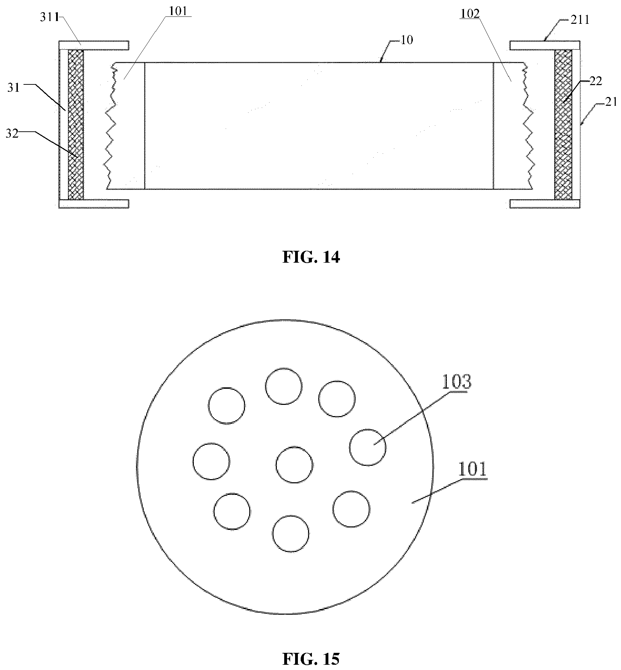

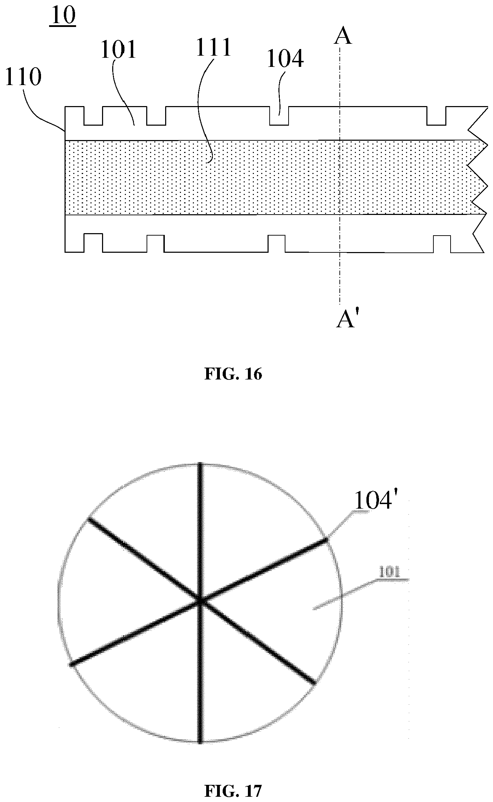

In some embodiments, referring to FIG. 16, the first electrode plate induces a first current collector 110 and a first active material layer 111 arranged on the first current collector 110, and the second electrode plate includes a second current collector and a second active material layer arranged on the second current collector (not shown in FIG. 16). Referring to FIG. 14, along the axial direction of the electrode assembly 10, the first current collector includes a first tab 101, and the second current collector includes a second tab 102. No first active material layer is arranged on the first tab 101, and the first tab 101 is connected to the first conductive portion 22. No second active material layer is provided on the second tab 102, and the second tab 102 is connected to the second conductive portion 32. For example, blank foils can be left at outer ends of the positive electrode and the negative electrode of the winding electrode assembly 10 and respectively used as the first tab 101 and the second tab 102, and the blank foils are flattened at the both ends of the electrode assembly 10 after a rolled core is formed through winding (this kind of tab structure is usually called a full-tab structure in the industry), and the first current collecting plate 21 and the second current collecting plate 31 are respectively welded on flattened planes of the blank foils.

As shown in FIG. 15 (for example), in some further embodiments, at least one of the first tab 101 or the second tab 102 includes a third through-hole 103, and the electrolyte solution can infiltrate the electrode assembly through the third through-hole 103 to prevent introduction of the first tab 101 or the second tab 102 from affecting an infiltration effect of the electrolyte solution on the electrode assembly 10. For example, the third through-hole 103 can be arranged on the flattened planes of the blank foils.

In some embodiments, the electrode assembly 10 is a winding structure, and along a winding direction of the electrode assembly 10, a length of the first tab 101 is the same as a length of the first current collector. Alternatively, the electrode assembly 10 is a laminated structure, and along a direction perpendicular to the axial direction of the electrode assembly 10, a length of the first tab 101 is the same as a length of the first current collector. For the winding electrode assembly, a direction perpendicular to the axial direction of the electrode assembly 10 is a direction in which the electrode plates are winded in a stacking manner. In some embodiments, at least one of the first tab 101 and the second tab 102 is flattened to form a plane, which can increase a connection area with the current collecting plate, and can be connected to the current collecting plate through welding. In other embodiments, the first tab 101 or the second tab 102 has not been flattened, and may be connected to the corresponding current collecting plate through the conductive glue.

Optionally, the first tab 101 or the second tab 102 is provided with a groove 104. The groove 104 may communicate with inner space and outer space of the electrode assembly 10 together with the first portion 210 or the second portion 310 to improve the infiltration effect of the electrode assembly 10.

Optionally, FIG. 16 is an expanded view of the first electrode plate, and the first tab 101 is provided with a plurality of grooves 104. Along a direction AA' perpendicular to the axial direction of the electrode assembly 10, orthographic projections of the plurality of grooves 104 have an overlapping portion. Arranging the plurality of grooves 104 can further improve the infiltration effect of the electrode assembly 10. FIG. 17 is a schematic diagram of an end face of a winding electrode assembly. A groove 104' shown in FIG. 17 is formed by combining the grooves 104 of the tabs after winding.

A lithium-ion battery is used as an example below with reference to specific embodiments to describe the electrochemical apparatus of this application. Those skilled in the art should understand that the lithium-ion battery described in this application is merely an example, and any other suitable electrochemical apparatuses are within the scope of this application.

### Embodiment 1

This embodiment provides a lithium-ion battery, including a winding electrode assembly 10, a first current collecting member 20, and a second current collecting member 30. The winding electrode assembly 10 is a full-tab structure. As shown in FIG. 2, structures of the first current collecting member 20 and the second current collecting member 30 both include a metal current collecting plate and conductive glue coated on the metal current collecting plate, and the conductive glue is conductive silver glue.

As shown in FIG. 1, the current collecting plate coated with the conductive glue is attached to a positive electrode and a negative electrode of the full-tab electrode assembly 10 to achieve effective electronic contact.

As shown in FIG. 5 and FIG. 6, distribution regions of the conductive glue coated on the current collecting plates are all semicircular: one is a positive current collecting plate (that is, a first current collecting plate 21), and the other is a negative current collecting plate (that is, a second current collecting plate 31). The conductive glue on the positive electrode and the conductive glue on the negative electrode do not overlap, and are combined together to roughly form a round shape, so that the conductive glue can be closely attached to end faces of the electrode assembly 10, and an electrolyte solution can infiltrate the electrode assembly 10 at least from a region of the positive electrode or the negative electrode uncoated with the conductive glue.

Certainly, the conductive glue may alternatively be coated on flattened planes of a positive tab and a negative tab at both ends of the winding electrode assembly 10.

For the winding electrode assembly, the electrolyte solution mostly infiltrate from both of the positive tab and the negative tab. If the current collecting plates are soundly connected to the tabs through the conductive glue or welding, the electrolyte solution is restricted from infiltration at the both ends. Based on the solution of this application, the positive current collecting plate and the negative current collecting plate (that is, the first current collecting plate 21 and the second current collecting plate 31) can have regions that are not connected to the tabs (that is, regions without the conductive glue), and connection areas between the positive and negative electrodes and the current collecting plates have a non-overlapping region in an axial direction of the battery, so that the electrolyte solution can infiltrate the battery assembly in the unconnected regions from at least one of the positive electrode or the negative electrode.

### Embodiment 2

As shown in FIG. 8 and FIG. 9, a difference from Embodiment 1 is that the conductive glue of this embodiment is conductive graphite glue; a middle strip-shaped region of the first current collecting plate 21 is coated with the conductive glue; and arc regions on both sides of the second current collecting plate 31 are coated with the conductive glue. One of the first current collecting plate 21 and the second current collecting plate 31 is the positive current collecting plate, and the other is the negative current collecting plate. Orthographic projections of the conductive glue on the first current collecting plate 21 and the second current collecting plate 31 on a cross section perpendicular to the axial direction of the battery do not overlap, and are combined together to form a round shape.

The orthographic projections of the conductive glue on the first current collecting plate 21 and the second current collecting plate 31 on the cross section perpendicular to the axial direction of the battery do not overlap. This achieves that each region on the cross section perpendicular to the axial direction of the battery can infiltrate the electrode plates of the electrode assembly 10 from at least one of the positive tab or the negative tab, improving an infiltration effect of the electrolyte solution. The orthographic projections of the conductive glue on the first current collecting plate 21 and the second current collecting plate 31 on the cross section perpendicular to an axial direction of the battery are combined to form a round shape, which roughly covers the cross section of the winding electrode assembly 10. This can achieve a maximum connection area between the conductive tab and the current collecting plate, and is conducive to electron conduction. The solution of this application achieves that the conductive glue is closely attached to the electrode assembly 10, and the electrolyte solution can infiltrate the electrode plates of the electrode assembly 10 at least from the region of the positive electrode or the negative electrode uncoated with the conductive glue.

### Embodiment 3

As shown in FIG. 10 and FIG. 11, a difference from Embodiment 1 is that the conductive glue of this embodiment is conductive copper glue; a conductive glue coated region of the first current collecting plate 21 (that is, the first conductive portion 22) is roughly similar to a "three-pointed star"; a conductive adhesive coated area of the second current collecting plate 31 (that is, the second conductive portion 32) is a fan-shaped region complementary to the conductive glue coated area of the first current collecting plate 21. One of the first current collecting plate 21 and the second current collecting plate 31 is the positive current collecting plate, and the other is the negative current collecting plate. The conductive glue on the positive electrode and the conductive glue on the negative electrode do not overlap, and are combined together to form a round shape, so that the conductive glue is closely attached to the electrode assembly 10, and the electrolyte solution can infiltrate at least from a region of the positive electrode or the negative electrode uncoated with the conductive glue.

### Embodiment 4

As shown in FIG. 12 and FIG. 13, a difference from Embodiment 1 is that the conductive glue of this embodiment is a mixture of conductive silver glue and conductive graphite glue; the conductive glue coated region of the first current collecting plate 21 is a circle with a radius of rl in a central region, the conductive glue coated region of the second current collecting plate 31 is located in a ring region that is co-centered with the second current collecting plate 31, with an inner diameter of R3 and an outer diameter of R3'. One of the first current collecting plate 21 and the second current collecting plate 31 is the positive current collecting plate, and the other is the negative current collecting plate. The conductive glue on the positive electrode and the conductive glue on the negative electrode do not overlap, and are combined to form a round shape.

Particularly, a region of the second current collecting plate 31 that is not coated with the conductive glue (that is, a region of the second through-hole 40 in FIG. 13) is hollowed out or made into a hollow design, which allows the electrolyte solution to directly infiltrate the battery from the hollowed region. In this way, while the conductive glue is closely attached to the electrode assembly 10, the electrolyte solution can infiltrate at least from the positive electrode or the negative electrode uncoated with the conductive glue.

### Embodiment 5

As shown in FIG. 14, a difference from the foregoing embodiments is that the conductive glue of this embodiment is a mixture of conductive graphite glue, conductive copper glue, and the like; and the first current collecting plate 21 includes a first insulation member 211, and the second current collecting plate 31 includes a second insulation member 311. The first insulation member 211 is arranged on an edge of the first current collecting plate 21, and the second insulation member 311 is arranged on an edge of the second current collecting plate 31. In this way, the design of the current collecting plate including the insulation member can reduce the short circuit risk of the conductive glue overflowing and contacting a housing, and prevent the current collecting plate from contacting the housing to cause a short circuit.

The electrochemical apparatus provided in this application has excellent electrical properties due to the structure and effects described above. In some implementation scenarios, the electrochemical apparatus provided in this application may be an energy storage apparatus, such as a battery.

This application further provides an electronic apparatus, including the electrochemical apparatus according to any one of foregoing embodiments of this application.

The electrochemical apparatus of this application is not particularly limited to any purpose, and may be used for any known electronic apparatuses in the prior art. In some embodiments, the electrochemical apparatus of this application may be used for, without limitation to: a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notebook, a calculator, a memory card, a portable recorder, a radio, a standby power source, a motor, an automobile, a motorcycle, a motor bicycle, a bicycle, a lighting appliance, a toy, a game console, a clock, an electric tool, a flash lamp, a camera, a large household battery, a lithium-ion capacitor, or the like.

Although this application has been illustrated and described with reference to one or more implementations, those skilled in the art will think of equivalent variations and modifications based on reading and understanding of the specification and the accompanying drawings. This application includes all such modifications and variations, and is limited only by the scope of the claims.

To be specific, the foregoing descriptions are only the embodiments of this application, and do not limit the patent scope of this application. Any equivalent structure or equivalent process transformation made by using the content of the specification and the accompanying drawings of this application, for example, the mutual combination of technical features among the embodiments, or direct or indirect application in other related technical fields, are similarly included in the scope of patent protection of this application.

In addition, in the descriptions of this application, it should be understood that orientations or position relationships indicated by the terms "middle", "axial direction", "up", "down", "front", "rear", "left", "right", "vertical", "horizontal", "top", "bottom", "inside", "outside", and the like are based on orientations or position relationships shown in the accompanying drawings, and are merely intended to simplify description of this application for a purpose of easy description, rather than indicating or implying that an apparatus or a part must have a particular direction or must be constructed and operated in a particular orientation. Therefore, this shall not be construed as any limitation on this application.

In addition, the structural elements with the same or similar characteristics may be identified by the same or different reference numerals in this application. In addition, the terms "first" and "second" are merely intended for a purpose of description, and shall not be understood as an indication or implication of relative importance or an implicit indication of the number of the indicated technical features. Therefore, a feature limited by "first" or "second" may explicitly or implicitly include one or more features. In the description of this application, the meaning of "plurality" is two or more than two, unless otherwise specifically defined.

In this application, the term "for example" is used to mean "serving as an example, illustration, or description". Any one embodiment described as "an example" in this application is not necessarily construed as being more preferable or advantageous than other embodiments. The foregoing descriptions of this application are provided to enable any person skilled in the art to implement and use this application. In the foregoing descriptions, details are listed for the purpose of explanation. It should be understood that those of ordinary skill in the art can realize that this application can also be implemented without using these specific details. In other embodiments, the well-known structure and process will not be described in detail to avoid unnecessary details to obscure the descriptions of this application. Therefore, this application is not intended to be limited to the illustrated embodiments, but is consistent with the widest scope that conforms to the principles and features disclosed in this application.

## Claims

1. An electrochemical apparatus (100), comprising: an electrode assembly (10), wherein the electrode assembly (10) comprises a first electrode plate, a second electrode plate, and a separator, and the separator is arranged between the first electrode plate and the second electrode plate;
**characterized in that**,
the electrochemical apparatus (100) further comprises a first current collecting member (20) and a second current collecting member (30), and along an axial direction (AA') of the electrode assembly (10), the first current collecting member (20) and the second current collecting member (30) are located at two opposite ends of the electrode assembly (10);
the first current collecting member (20) comprises a first current collecting plate (21) and a first conductive portion (22) arranged on the first current collecting plate (21), the first conductive portion (22) is located between the first current collecting plate (21) and the electrode assembly (10), and the first conductive portion (22) is connected to the first electrode plate;
the second current collecting member (30) comprises a second current collecting plate (31) and a second conductive portion (32) arranged on the second current collecting plate (31), the second conductive portion (32) is located between the second current collecting plate (31) and the electrode assembly (10), and the second conductive portion (32) is connected to the second electrode plate;
the first current collecting plate (21) comprises a first portion (210), the second current collecting plate (31) comprises a second portion (310), and the electrochemical apparatus (100) satisfies at least one of the following conditions:
no first conductive portion (22) is provided in the first portion (210); and
no second conductive portion (32) is provided in the second portion (310).

2. The electrochemical apparatus (100) according to claim 1, **characterized in that**, in the axial direction (AA') of the electrode assembly (10), orthographic projections of the first conductive portion (22) and the second conductive portion (32) do not completely overlap.

3. The electrochemical apparatus (100) according to claim 2, **characterized in that**, in the axial direction (AA') of the electrode assembly (10), the orthographic projections of the first conductive portion (22) and the second conductive portion (32) have no overlapping portion.

4. The electrochemical apparatus (100) according to claim 1, **characterized in that**, the first conductive portion (22) is solder or conductive glue, and the second conductive portion (32) is solder or conductive glue.

5. The electrochemical apparatus (100) according to claim 4, **characterized in that**, at least one of the first portion or the second conductive portion is the conductive glue and the conductive glue is provided with a first through-hole.

6. The electrochemical apparatus (100) according to claim 1, **characterized in that**, at least one of the first portion (210) or the second portion (310) is provided with a second through-hole (40).

7. The electrochemical apparatus (100) according to claim 1, **characterized in that**, a projection of a straight line from a center to an edge of the electrode assembly (10) on the first current collecting plate (21) is located in the first portion (210).

8. The electrochemical apparatus (100) according to claim 1, **characterized in that**, the first electrode plate comprises a first current collector (110) and a first active material layer (111) arranged on the first current collector (110), and the second electrode plate comprises a second current collector and a second active material layer arranged on the second current collector;
along the axial direction (AA') of the electrode assembly (10), the first current collector (110) comprises a first tab (101), and the second current collector comprises a second tab (102), the first tab (101) is connected to the first conductive portion (22), and the second tab (102) is connected to the second conductive portion (32).

9. The electrochemical apparatus (100) according to claim 8, **characterized in that**, at least one of the first tab (101) or the second tab (102) comprises a third through-hole (103).

10. The electrochemical apparatus (100) according to claim 8, **characterized in that**, the electrode assembly (10) has a winding structure, and along a winding direction, a length of the first tab (101) is equal to a length of the first current collector (110); or
the electrode assembly (10) is a laminated structure, and along a direction perpendicular to the axial direction (AA') of the electrode assembly, a length of the first tab (101) is equal to a length of the first current collector (110).

11. The electrochemical apparatus (100) according to claim 8, **characterized in that**, at least one of the first tab (101) or the second tab (102) is provided with a groove (104).

12. The electrochemical apparatus (100) according to claim 11, **characterized in that**, the first tab (101) is provided with a plurality of grooves (104), and along a direction perpendicular to the axial direction (AA') of the electrode assembly (10), orthographic projections of the plurality of grooves (104) have an overlapping portion.

13. The electrochemical apparatus (100) according to claim 1, **characterized in that**, the first current collecting plate (21) comprises a first insulation member (211), and the first insulation member (211) is arranged on an edge of the first current collecting plate (21).

14. An electronic apparatus, comprising the electrochemical apparatus (100) according to any one of claims **1** to **13.**
